# EUROPEAN PATENT APPLICATION

(11) **EP 2 169 407 A1**
(43) Date of publication of application: **31.03.2010**
(21) Application number: 08777782.7
(22) Date of filing: 02.07.2008
(51) Int. Cl.: G01P 3/487, B60B 35/18, F16C 19/18, F16C 33/78, F16C 41/00

(54) **SENSOR DEVICE, AND ROLLING BEARING DEVICE WITH SENSOR**

(30) Priority: 03.07.2007 JP 2007174761; 03.07.2007 JP 2007174764
(71) Applicant: JTEKT Corporation, Osaka-shi Osaka 542-8502 (JP)
(72) Inventor: ISHII, Yasuhiko, Osaka-shi Osaka 542-8502 (JP); MOTOHASHI, Nobutsuna, Osaka-shi Osaka 542-8502 (JP); KADOTA, Yasushi, Osaka-shi Osaka 542-8502 (JP)
(74) Representative: Schaeberle, Steffen
(86) International application number: PCT/JP2008/061979
(87) International publication number: WO 2009/005085

(57) **Abstract**

A core of a fixed-side sealing member has a fitting cylindrical part fitted with the fixed-side sealing member. An outer end portion of the fitting cylindrical part is insertion-molded to be disposed within a resin member. An outer edge portion of the fitting cylindrical part in an axial direction thereof is bent.

## Description

### TECHNICAL FIELD

The present invention relates to a sensor device which is preferably incorporated in a sealing device, and a sensor-integrated rolling bearing device provided with such a sensor device.

### BACKGROUND ART

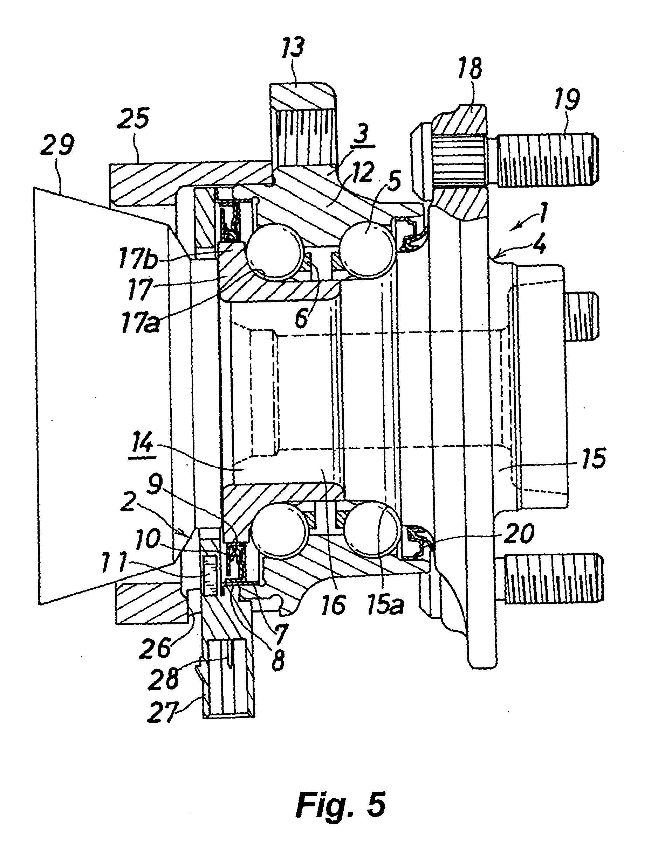

In a vehicle, various information are required for performing controls of the vehicle, and therefore, a sensor device is provided in a hub unit (a rolling bearing device) having a wheel-side raceway member to which a wheel is fitted, a body-side raceway member which is fixed to a vehicle body, and rolling elements in two rows which are arranged between the two raceway members. In order to install the sensor device with less space, as shown in Fig. 5, there is proposed a sensor-integrated sealing device 2 in which a pulsar 10 and a sensor 11 are integrally provided with a sealing device 7 (see Japanese Patent Publication No. 2005-98387A).

In Fig. 5, a hub unit 1 is mounted on a constant velocity joint (CVJ) 29, and includes: a body-side raceway member 3 which is fixed to a vehicle body; a wheel-side raceway member 4 to which a wheel is fitted; a plurality of balls 5 as rolling elements which are arranged in two rows between the two raceway members 3 and 4; and cages 6 for respectively holding the balls 5 in the respective rows. The body-side raceway member 3 serves as an outer ring (a fixed ring) of the bearing, and has a cylindrical part 12 provided with outer ring raceways in two rows on its inner peripheral face, and a flange part 13 which is provided in the vicinity of a left end of the cylindrical part 12 and adapted to be attached to a suspension device (a vehicle body) with a bolt. The wheel-side raceway member 4 includes: a large-diameter part 15 having a first raceway groove 15a; a hollow shaft 14 having a small-diameter part 16 whose outer diameter is smaller than a diameter of the first raceway groove 15a; and an inner ring 17 which is attached to an outer periphery of the small-diameter part 16 of the hollow shaft 14 in such a manner that its right face is in tight contact with a left face of the large-diameter part 15 of the hollow shaft 14. A flange part 18 to which a plurality of bolts 19 for securing the wheel are fixed is provided in the vicinity of a right end of the hollow shaft 14. The inner ring 17 is provided with a raceway groove 17a in parallel with the raceway groove 15a of the hollow shaft 14, and a shoulder part 17b is formed on a left part of the inner ring 17. A sealing member 20 is provided between a right end of the body-side raceway member 3 and the hollow shaft 14.

The sensor-integrated sealing device 2 includes: a fixed-side sealing member 8 having the sensor 11 which is resin-molded and fitted with the body-side raceway member 3; and a rotation-side sealing member 9 having the pulsar 10 which is fitted with the wheel-side raceway member 4. A knuckle 25 is formed with a cutout 26 for leading out a wiring of the sensor, and a connector part 27 having a connector pin 28 is projected from the cutout 26.

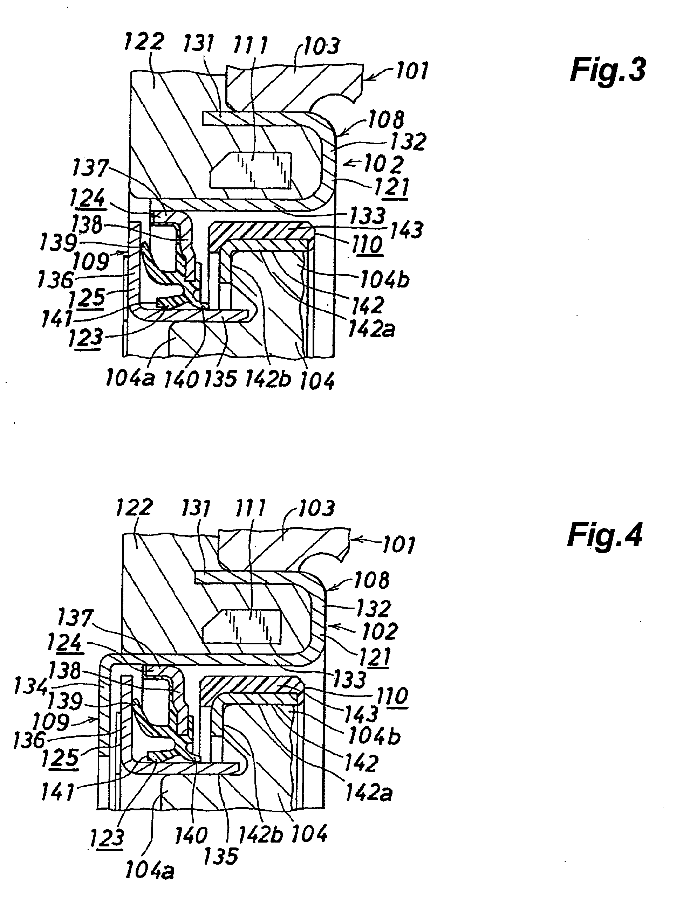

In Japanese Patent Publication No. 2005-98387A, a plurality of through holes each having a square cross-section are formed in a cylindrical part of a core of the fixed-side sealing member 8, at a substantially equal interval in a circumferential direction (see Fig. 4 of the Publication). A sensor is inserted into one of the through holes, and resin is filled in the other through holes, whereby movement of the resin member with respect to the core is restrained (see the paragraph [0044] in the Publication).

In the above-described conventional sensor-integrated sealing device, it is necessary to apply bending work (drawing work) to the core, after the holes have been formed in the core, and the fitting cylindrical part of the finished core tends to be deteriorated in roundness in a petal-like shape, thereby to lower sealing performance of the fitting part. Therefore, it is required to prevent deterioration of the sealing performance due to retention of the resin.

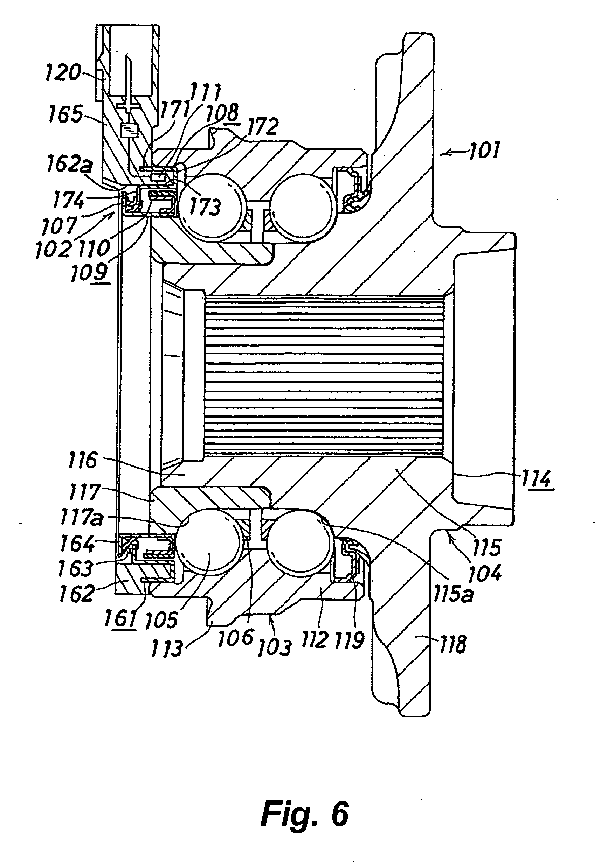

Fig. 6 is a vertical sectional view showing a sensor-integrated sealing device and a rolling bearing device related to this invention. The sensor-integrated sealing device and the rolling bearing device as shown in Fig. 6 is disclosed in Japanese Patent Publication No. 2007-127142A (published on May 24, 2007), and does not constitute the prior art of the invention.
In a vehicle, various information are required for performing controls of the vehicle, and therefore, a sensor device is provided in a hub unit (a rolling bearing device) having: a wheel-side raceway member to which a wheel is fitted; a body-side raceway member which is fixed to a vehicle body; and rolling elements in two rows which are arranged between the two raceway members. In order to install the sensor device with a less space, as shown in Fig. 6, there is proposed a hub unit 101 incorporating a sensor-integrated sealing device 102 in which a sealer 107, a pulsar 110 and a sensor 111 are integrally provided.

In Fig. 6, the hub unit 101 includes: a body-side raceway member 103 which is fixed to a vehicle body; a wheel-side raceway member 104 to which a wheel is fitted; a plurality of balls 105 as rolling elements which are arranged in two rows between the two raceway members 103 and 104; and cages 106 for respectively holding the balls 105 in the respective rows. The body-side raceway member 103 serves as an outer ring (a fixed ring) of the bearing, and has: a cylindrical part 112 provided with outer ring raceways in two rows on its inner peripheral face; and a flange part 113 which is provided in the vicinity of a left end of the cylindrical part 112 and attached to a suspension device (a vehicle body) with a bolt. The wheel-side raceway member 104 includes: a large-diameter part 115 having a first raceway groove 115a; a hollow shaft 114 having a small-diameter part 116 whose outer diameter is smaller than a diameter of the first raceway groove 115a; and an inner ring 117 which is attached to an outer periphery of the small-diameter part 116 of the hollow shaft 114 in such a manner that its right face is in tight contact with a left face of the large-diameter part 115 of the hollow shaft 114. A flange part 118 for securing the wheel is provided in the vicinity of a right end of the hollow shaft 114. The inner ring 117 is provided with a raceway groove 117a in parallel with the raceway groove 115a of the hollow shaft 114. A sealing member 119 is provided between a right end of the body-side raceway member 103 and the hollow shaft 114.

The sealing device 102 with the sensor includes: a fixed-side sealing member 108 which is fixed to the body-side raceway member 103; and a rotation-side sealing member 109 which is fixed to the wheel-side raceway member 104. The fixed-side sealing member 108 includes: a core 161 which is fitted with the body-side raceway member 103; a resin member 162 which is integrally provided with the core 161 by insertion molding; a sensor 111 which is supported by the resin member 162; and an elastic seal 163 which is bonded to the core 161. The rotation-side sealing member 109 includes: a slinger 164 which is fitted with the wheel-side raceway member 104; and a pulsar 110 which is attached to the slinger 164.

The core 161 has: a fitting cylindrical part 171 which is fitted with a left end part of the body-side raceway member 103; a connecting part 172 which is continued from an inner end in an axial direction (a right end) of the cylindrical part 171 and extends inward in a radial direction (in a direction toward the rotation-side sealing member 109); a water-proofing cylindrical part 173 which is continued from the connecting part 172 and extends outward in the axial direction (leftward); and a flange part 174 which is continued from the water-proofing cylindrical part 173 and extends inward in the radial direction. The elastic seal 163 is attached to an inner peripheral edge of the flange part 174.

The resin member 162 is formed in an annular shape, and a projected part 165 which is projected leftward and outward in the radial direction is provided on an upper part of the annular part. A connector part 120 is integrally formed at an upper end of this projected part 165 for fitting a harness which interconnects a processor provided at the vehicle body side and the sensor 111.

In this conventional sensor-integrated sealing device 102, the core 161 is a resin-molded product provided with the elastic seal 163. The core 161 is molded with resin, after the elastic seal 163 is attached thereto. When the core 161 is resin-molded, it is necessary to bring a mold into contact with an inner peripheral face 162a of the resin member 162. Incidentally, the flange part 174 of the core 161 is used as a flat part onto which the mold comes in contact.

In the above-described conventional sensor-integrated sealing device, the core 161 to which the elastic seal 163 is attached is disposed in a molding cavity thereby to be resin-molded. On this occasion, there is such anxiety that when the elastic seal 163 comes into contact with the mold at a high temperature, the elastic seal 163 is hardened and sealing performance is deteriorated. Moreover, since the flange part 174 of the core 161 is used as the flat part onto which the mold comes in contact, it is difficult to reduce a size of this part to achieve downsizing in the radial direction.

Further, in a case where the sensor-integrated sealing device of this type is incorporated in a hub unit of a vehicle, since the hub unit is in a severe environment with muddy water, usually, a seal ring formed of metal, which is called as a deflector or so, is provided outside the bearing device, thereby to enhance its sealing performance. However, use of the deflector incurs an increase of cost for components, necessity of working cost for press-fitting the deflector, and so on, which are reasons for an increase of cost. Therefore, it is required to eliminate the deflector.

### DISCLOSURE OF THE INVENTION

### Problems to be Solved by the Invention

In view of the above, it is an object of the invention to provide a sensor device and a sensor-integrated rolling bearing device, wherein extrusion of resin is prevented while sealing performance of a fitting part is secured.

It is another object of the invention to provide a sensor-integrated sealing device and a rolling bearing device incorporating the same, wherein an elastic seal is prevented from coming into contact with a mold and being hardened, when it is resin-molded,.

It is still another object of the invention to provide a sensor-integrated sealing device and a rolling bearing device incorporating the same, wherein sealing performance is enhanced to such a level that it is unnecessary to provide a separate sealing device, such as a deflector, outside the bearing device.

### How to Solve the Problems

According to the invention, there is provided a sensor device, comprising:
a fixed-side member, comprising:
   a core, fitted with a fixed member; and
   a sensor, resin-molded with the core; and
a rotation-side member, fitted with a rotary member, wherein:
   the core of the fixed-side member has a fitting cylindrical part fitted with the fixed member;
   an outer end portion of the fitting cylindrical part is insertion-molded to be disposed within a resin member; and
   an outer edge portion of the fitting cylindrical part in an axial direction thereof is bent.

The core is subjected to bending work (drawing work), and a number of through holes which have been conventionally provided for retaining the resin before the bending work are eliminated. The fitting cylindrical part is provided with a hole or a cutout (for example, only a cutout for taking out a wiring of the sensor outward) which is essential in the sensor device. Since the bent edge part does not contribute to sealing performance of the fitting part, it is possible to provide cutouts in this bent edge part at a prescribed interval in a circumferential direction.

It is preferable that the sensor device is incorporated in a sealing device. In this case, there is provided a sensor-integrated sealing device, comprising:
a fixed-side sealing member, comprising:
   a core, fitted with a fixed member; and
   a sensor, resin-molded with the core; and
a rotation-side sealing member, comprising:
   a cylindrical part, fitted with a rotary member; and
   a flange part, continued from an outer end portion of the cylindrical part in an axial direction thereof and extending toward the fixed-side sealing member, wherein:
the core of the fixed-side sealing member comprises:
   a fitting cylindrical part, fitted with the fixed member;
   a flange part, continued from an inner end portion of the fitting cylindrical part in an axial direction thereof and extending toward the cylindrical part of the rotation-side sealing member; and
   a waterproofing cylindrical part, continued from the flange part and extending outward in an axial direction thereof;
an outer end portion of the fitting cylindrical part is insertion-molded to be disposed within a resin member;
an elastic seal is provided on at least one of the core and the rotation-side sealing member.

The fixed member is an outer ring or an inner ring of the rolling bearing, for example, and the rotary member is the inner ring or the outer ring of the rolling bearing, for example, but not limited to this.

The sensor is a magnetic sensor employing an MR element or a Hall element, for example, but not limited to this. Usually, the cylindrical part of the rotation-side sealing member is provided with a pulsar which opposes the magnetic sensor to give a signal to the sensor.

The core and the resin member are formed by insertion molding. On this occasion, an outer end of the fitting cylindrical part is disposed inside the resin member. Namely, the core is not brought into tight contact with only a surface of the resin member, but the end of the core is inserted into an interior of the resin member.

The above-described sensor device is preferably used in a sensor-integrated rolling bearing device comprising:
a rolling bearing, integrally provided with the above sensor-integrated sealing device, and comprising:
   a fixed ring, serving as the fixed member;
   a rotary ring, serving as the rotary member; and
   a rolling element, disposed between the rings.

In this case, there is provided a sensor-integrated rolling bearing device, comprising:
a rolling bearing, comprising:
   a fixed ring;
   a rotary ring; and
   a rolling element disposed between the rings;
a fixed-side sealing member, comprising:
   a core, fitted with the fixed ring; and
   a sensor, resin-molded with the core; and
a rotation-side sealing member, comprising:
   a cylindrical part, fitted with the rotary ring; and
   a flange part, continued from an outer end portion of the cylindrical part in an axial direction thereof and extending toward the fixed-side sealing member, wherein:
the core of the fixed-side sealing member comprises:
   a fitting cylindrical part, fitted with the fixed ring;
   a flange part, continued from an inner end portion of the fitting cylindrical part in an axial direction thereof and extending toward the cylindrical part of the rotation-side sealing member; and
   a waterproofing cylindrical part, continued from the flange part and extending outward in an axial direction thereof;
an outer end portion of the fitting cylindrical part is insertion-molded to be disposed within a resin member;
an elastic seal is provided on at least one of an outer end portion of the waterproofing cylindrical part in the axial direction thereof and an outer end portion of the rotation-side sealing member in an axial direction thereof;
an outer end portion of the fitting cylindrical part of the core in the axial direction thereof is bent.

In this case, the fixed ring may be the outer ring, and the rotary ring may be the inner ring, or alternatively, the fixed ring may be the inner ring, and the rotary ring may be the outer ring.

In this rolling bearing device, the fixed ring serves as a body-side raceway member having a part to be attached to the vehicle body, and the rotary ring serves as a wheel-side raceway member having a part to which a vehicle wheel is attached, whereby this rolling bearing device can be preferably used as a hub unit for a vehicle.

According to this sensor device of the invention, since the outer edge portion in the axial direction of the fitting cylindrical part of the core is bent, a number of the through holes which have been conventionally provided for retaining the resin can be eliminated. In this manner, deterioration in roundness of the fitting cylindrical part of the finished core is prevented, and deterioration of sealing performance of the fitting part can be prevented. Since retention of the resin can be performed by bending the edge, it is possible to prevent an escape of the resin while the sealing performance of the fitting part is secured.

According to the invention, there is provided a sensor-integrated sealing device, comprising:
a fixed-side sealing member, comprising:
   a core, fitted with a fixed member; and
   a sensor, resin-molded with the core; and
a rotation-side sealing member, comprising:
   a cylindrical part, fitted with a rotary member; and
   a flange part, continued from an outer end portion of the cylindrical part in an axial direction thereof and extending toward the fixed-side sealing member, wherein:
the core of the fixed-side sealing member comprises:
   a fitting cylindrical part, fitted with the fixed member;
   a flange part, continued from an inner end portion of the fitting cylindrical part in an axial direction thereof and extending toward the cylindrical part of the rotation-side sealing member; and
   a waterproofing cylindrical part, continued from the flange part and extending outward in an axial direction thereof;
an outer end portion of the fitting cylindrical part is insertion-molded to be disposed within a resin member;
an elastic seal is provided on at least one of the core and the rotation-side sealing member;
an elastic seal holder is press-fitted into the core; and
the elastic seal is attached to the elastic seal holder so as to be in slidable contact with the rotation-side sealing member.

The fixed member is an outer ring or an inner ring of the rolling bearing, for example, and the rotary member is the inner ring or the outer ring of the rolling bearing, for example, but not limited to this.

The elastic seal holder comprises, for example, a cylindrical part to be press-fitted into the waterproofing cylindrical part of the core, and a flange part extending from an inner end of the cylindrical part in the axial direction to the cylindrical part of the rotation-side sealing member. The elastic seal is attached to the flange part.

Preferably, the elastic seal is in slidable contact with both the cylindrical part and the flange part of the rotation-side sealing member, and for example, has at least one axial rip which is in slidable contact with the flange part of the rotation-side sealing member, and at least two radial rips which are in slidable contact with the cylindrical part of the rotation-side sealing member.

The sensor is a magnetic sensor employing, for example, an MR element or a Hall element, but not limited to this. Usually, the cylindrical part of the rotation-side sealing member is provided with a pulsar ring which opposes the magnetic sensor to give a signal to the sensor. The pulsar ring may be directly press-fitted to an outer periphery of the inner ring, or may be press-fitted to the rotation-side sealing member. The magnetized body may be a rubber magnet or resin bond magnet according to necessity.

The core includes the two cylindrical parts having different diameters (the fitting cylindrical part and the waterproofing cylindrical part), and the connecting part for interconnecting them. The core further includes a flange part which is continued from the waterproofing cylindrical part and extends toward the rotation-side sealing member.

The core and the resin member are formed by insertion molding. On this occasion, an outer end portion of the fitting cylindrical part is positioned inside the resin member. Specifically, the core is not brought into tight contact with only a surface of the resin member, but the end portion of the core is inserted into an interior of the resin member. Since the elastic seal is not attached to the core, it is possible to avoid such a problem that the elastic seal may be hardened when the core is disposed in the molding cavity and resin-molded. Since there is no necessity of paying attention to a contact between the elastic seal and the mold, it is possible to make the molding work easier. The flange part continued from the waterproofing cylindrical part of the core to which the elastic seal is fitted, in the conventional sealer is unnecessary as means for fitting the elastic seal, and also as the flat part to which the mold is brought into contact. Therefore, by omitting this flange part, a size of the core in the radial direction can be reduced, and bending work of the core can be performed easily.

The flange part continued from the waterproofing cylindrical part of the core can be so provided as to oppose the flange part of the rotation-side sealing member from an outside in the axial direction. In this manner, this flange part has the substantially same sealing function as the deflector which has been provided separately from the sealing device.

The above-described sensor-integrated sealing device is preferably used in a rolling bearing device, comprising:
a rolling bearing, integrally provided with the above sensor-integrated sealing device, and comprising:
   a fixed ring, serving as the fixed member;
   a rotary ring, serving as the rotary member; and
   a rolling element, disposed between the rings.

In this case, the fixed ring may be the outer ring, and the rotary ring may be the inner ring, or alternatively, the fixed ring may be the inner ring, and the rotary ring may be the outer ring.

In this rolling bearing device, the fixed ring serves as a body-side raceway member having a part attached to a vehicle body, and the rotary ring serves as a wheel-side raceway member having a part to which a vehicle wheel is attached, whereby this rolling bearing device can be preferably used as a hub unit for a vehicle.

According to the sensor-integrated sealing device of the invention, since the elastic seal is attached to the elastic seal holder which is a separate member from the core, it is possible to avoid such a problem that the elastic seal comes into contact with a mold and hardened at a time of resin molding. Moreover, since the flange part continued from the waterproofing cylindrical part of the core opposes the flange part of the rotation-side sealing member from the outside in the axial direction, the sealing performance is enhanced, and there is no necessity of providing a separate sealing device such as a deflector, outside the rolling bearing device.

### BRIEF DESCRIPTION OF THE DRAWINGS

Fig. 1 is a longitudinal section view showing a sealing device and a sensor-integrated rolling bearing device according to a first embodiment of the invention.
Fig. 2 is a section view of a core.
Fig. 3 is a longitudinal section view showing a sealing device and a sensor-integrated rolling bearing device according to a second embodiment of the invention.
Fig. 4 is a longitudinal section view showing a sealing device and a sensor-integrated rolling bearing device according to a third embodiment of the invention.
Fig. 5 is a longitudinal section view showing a related-art sealing device and a related-art sensor-integrated rolling bearing device.
Fig. 6 is a longitudinal section view showing a related-art sealing device and a related-art sensor-integrated rolling bearing device.

### BEST MODE FOR CARRYING OUT THE INVENTION

Embodiments of the invention will be described below with reference to the drawings.

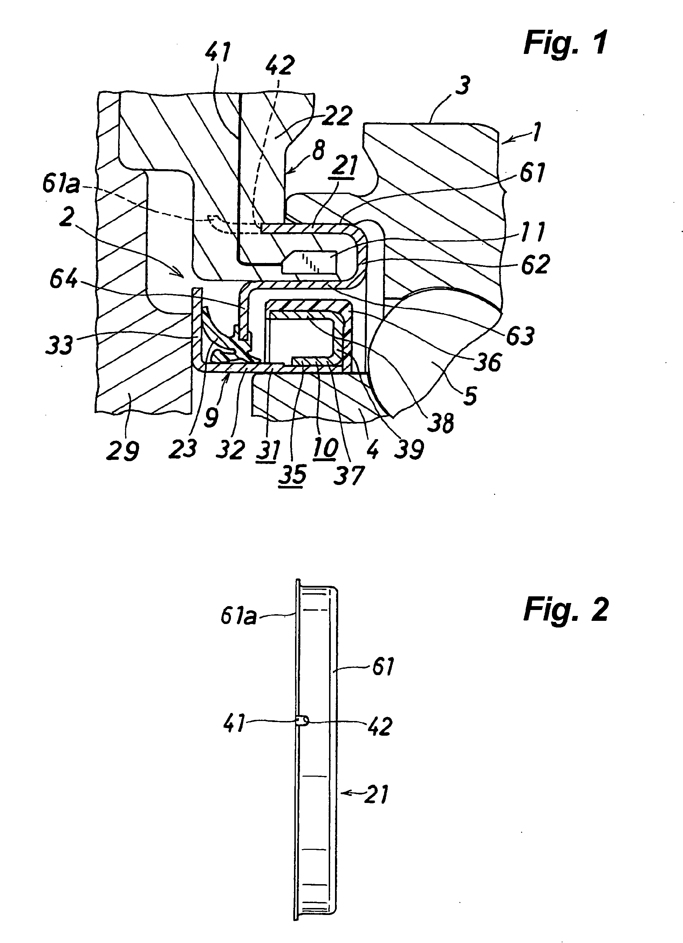

Figs. 1 and 2 show a sensor device and a sensor-integrated rolling bearing device according to a first embodiment of the invention. It is to be noted that in the following description, a right side and a left side correspond to a right side and a left side in Fig. 1. Moreover, an inside of a vehicle is the left side, and an outside of the vehicle is the right side.

The sensor-integrated rolling bearing device includes a hub unit 1 and a sensor-integrated sealing device 2.

The hub unit 1 is the same as the hub unit as shown in Fig. 5, and includes: a body-side raceway member 3 which is fixed to a vehicle body; a wheel-side raceway member 4 to which a vehicle wheel is fitted; and a plurality of balls 5 as rolling elements which are arranged in two rows between the two raceway members 3 and 4.

The sensor-integrated sealing device 2 includes: a fixed-side sealing member 8 which is fixed to the body-side raceway member 3; and a rotation-side sealing member 9 which is fixed to the wheel-side raceway member 4.

The fixed-side sealing member 8 includes: a core 21; a resin member 22 which is integrally formed with the core 21 by insertion molding; a sensor 11 which is resin-molded with the core 21; and an elastic-contact seal 23 which is bonded to the core 21.

The rotation-side sealing member 9 includes: a slinger 31 which is fitted with the wheel-side raceway member 4; and a pulsar 10 which is fixed to the slinger 31.

The core 21 of the fixed-side sealing member 8 has: a fitting cylindrical part 61 which is fitted with a left end of the body-side raceway member 3; an outer flange part 62 which is continued from an inner end (a right end) of the cylindrical part 61 in an axial direction and extends inward (in a direction toward the rotation-side sealing member 9); a waterproofing cylindrical part 63 which is continued from the outer flange part 62 and extends outward in the axial direction (leftward); and an inner flange part 64 which is continued from the waterproofing cylindrical part 63 and extends inward. The elastic-contact seal 23 is bonded to an inner peripheral edge of the inner flange part 64. A left portion of the fitting cylindrical part 61 is projected leftward beyond the left end of the body-side raceway member 3, and inserted into the resin member 22. The waterproofing cylindrical part 63 is in contact with an inner peripheral face of the resin member 22, and its left end is located in the right side of a left end face of the resin member 22.

The core 21 of the fixed-side sealing member 8 is integrally formed with the resin member 22 by insertion molding. The resin member 22 is formed in an annular shape, and a connector part projecting outward in a radial direction (See the member 27 in Fig. 5) is integrally molded on an upper part of the annular part.

The sensor 11 is a magnetic sensor, and a sensing face thereof opposes an outer peripheral face of the pulsar 10 in the radial direction. The sensor 11 is disposed within the resin member 22 which is filled between the fitting cylindrical part 61 which is a large-diameter cylindrical part and the waterproofing cylindrical part 63 which is a small-diameter cylindrical part. The core 21 is formed of non-magnetic metal such as SUS304 so that the magnetic flux can easily reach a detection face of the magnetic sensor 11.

The core 21 is formed by drawing work, and an outer edge portion 61 a in the axial direction of the fitting cylindrical part 61 is bent outward in the radial direction. As shown in Fig. 2, the fitting cylindrical part 61 is formed with only one cutout 42 for leading out a lead wire 41, but not formed with the through holes which have been conventionally provided for retaining the resin member.

The slinger 31 includes: a cylindrical part 32 an inner end in the axial direction (a right end) of which is fitted with an outer periphery of a left end part of the wheel-side raceway member 4; and an outer flange part 33 which is continued from an outer end (a left end) of the cylindrical part 31 in the axial direction and extends toward the fixed-side sealing member 8. There is formed a space for accommodating the elastic-contact seal 23 between the outer flange part 33 and the inner flange part 64 of the core 21 of the fixed-side sealing member 8.

In the pulsar 10 of the rotation-side sealing member 9, N poles and S poles are alternately arranged to generate a magnetic force, so that the sensor 11 can output a rotation signal in cooperation with the pulsar 10. The pulsar 10 includes: a support member 35 in an annular shape; and a magnetized member 36 which is bonded to the support member 35. The support member 35 is formed of magnetic metal such as SUS430. The magnetized member 36 is magnetized with magnetic powder while using rubber as a binder.

The support member 35 of the pulsar 10 includes: a small-diameter cylindrical part 37 which is fitted with an outer periphery of the cylindrical part 32 of the slinger 31 of the rotation-side sealing member 9; a large-diameter cylindrical part 38 provided with the magnetized member 36 on its outer periphery; and a connecting part 39 which interconnects the large-diameter cylindrical part 38 and the small-diameter cylindrical part 37. The small-diameter cylindrical part 37 has a smaller length in the axial direction than the large-diameter cylindrical part 38. The magnetized member 36 is provided on the outer periphery of the large-diameter cylindrical part 38 so as to oppose the sensor 11, and a gap between the magnetized member 36 and the waterproofing cylindrical part 63 is set to be as small as possible with such an extent that they do not interfere with each other.

The small-diameter cylindrical part 37 of the support member 35 in the pulsar 10 is fitted with an inner part in the axial direction of the cylindrical part 32 of the slinger 31 in such a manner that the connecting part 39 is positioned inward in the axial direction. In this manner, since the small-diameter cylindrical part 37 of the support member 35 in the pulsar 10 is fitted with the inner end of the cylindrical part 32 of the slinger 31, a fitting part between the cylindrical part 32 of the slinger 31 and the wheel-side raceway member 4 is reinforced, and rigidity of the fitting part is enhanced.

According to this sensor-integrated sealing device 7, since the fitting cylindrical part 61 of the core 21 in the fixed-side sealing member 8 is fitted with the body-side raceway member 3, the core 21 will not slide with respect to the fixed-side sealing member 8 with a torque following sliding movement of the elastic-contact seal 23. Moreover, since the fitting cylindrical part 61 of the core 21 of the fixed-side sealing member 8 is insertion-molded in a state where its left portion is inserted into the resin member 22, a slippage between the core 21 and the resin member 22 is also prevented. Further, since the outer edge portion 61a in the axial direction of the fitting cylindrical part 61 of the core 21 is bent outward, a number of the through holes which have been conventionally provided for retaining the resin member can be eliminated. Therefore, deterioration of a roundness of the fitting cylindrical part 61 of the finished core 21 is prevented, and deterioration of sealing performance of the fitting part can be prevented. Moreover, since retention of the resin member can be achieved by bending the edge, an escape of the resin can be prevented while the sealing performance of the fitting part is secured.

Concerning a position where the pulsar 10 is engaged with the slinger 31, the connecting part 39 of the support member 35 is positioned inward in the axial direction, in a state where the inward portion in the axial direction of the cylindrical part 32 of the slinger 31 which constitutes the rotation-side sealing member 9 is fitted with the wheel-side raceway member 4. In this manner, the fitting part of the small-diameter cylindrical part 37 of the support member 35 is superposed on the fitting part between the slinger 31 and the wheel-side raceway member 4, and hence, the rigidity of the fitting part between the cylindrical part 32 of the slinger 31 and the wheel-side raceway member 4 is made relatively higher, since the fitting part is reinforced with the small-diameter cylindrical part 37 of the support member 35 of the pulsar 10.

Although the hub unit 1 in the above-described embodiment is shown as a hub unit for a driving wheel to be mounted on a constant velocity joint (CVJ) 29, it is of course possible to use it as a hub unit for a driven wheel. Moreover, although the description has been made referring to the hub unit 1, as an example, it is also possible to apply the above-described sensor device 2 to various types of rolling bearing devices, and to various types of rotary devices which are relatively rotated, besides the hub unit 1.

Fig. 3 shows a sensor-integrated sealing device and a rolling bearing device using the same according to a second embodiment of the invention. It is to be noted that in the following description, a right side and a left side correspond to a right side and a left side in Fig. 3. Moreover, an inside of a vehicle is the left side, and an outside of the vehicle is the right side.

The sensor-integrated rolling bearing device includes a hub unit 101 and a sensor-integrated sealing device 102.

The hub unit 101 is the same as the hub unit as shown in Fig. 6, and includes: a body-side raceway member 103 which is fixed to a vehicle body; and a wheel-side raceway member 104 to which a wheel is fitted. A left part of the wheel-side raceway member 104 is formed in a stepped shape, and has a small-diameter part 4a at a left end, and a large-diameter part 104b which is continued from a right side of the small-diameter part 4a.

The sensor-integrated sealing device 102 includes: a fixed-side sealing member 108 which is fixed to the body-side raceway member 103; and a rotation-side sealing member 109 which is fixed to the wheel-side raceway member 104.

The fixed-side sealing member 108 includes: a core 121; a resin member 122 which is integrally formed with the core 121 by insertion molding; a sensor 111 which is resin-molded to the core 121; an elastic seal holder 124 which is press-fitted into the core 121; and an elastic seal 123 which is bonded to the elastic seal holder 124.

The rotation-side sealing member 109 is provided with: a pulsar 10 which is fixed to the large-diameter part 104b of the wheel-side raceway member 104; and a slinger 125 which is fitted with the small-diameter part 104a of the wheel-side raceway member 104.

The core 121 of the fixed-side sealing member 108 has: a fitting cylindrical part 131 which is fitted with a left end part of the body-side raceway member 103, a connecting part 132 which is continued from an inner end (a right end) of the cylindrical part 131 in an axial direction and extends inward in a radial direction (in a direction toward the rotation-side sealing member 109); and a waterproofing cylindrical part 133 which is continued from the connecting part 132 and extends outward in the axial direction (leftward). The left portion of the fitting cylindrical part 131 is projected outward from a left end of the body-side raceway member 103, and inserted into the resin member 122. The waterproofing cylindrical part 133 is in contact with an inner peripheral face of the resin member 122, and its left end is positioned slightly rightward from a left end face of the resin member 122.

The sensor 111 is a magnetic sensor, and a sensing face thereof opposes an outer peripheral face of the pulsar 110 in the radial direction. The sensor 111 is disposed within the resin member 122 which is filled between the fitting cylindrical part 131 which is a large-diameter cylindrical part and the waterproofing cylindrical part 133 which is a small-diameter cylindrical part. The core 121 is formed of non-magnetic metal such as SUS304 so that the magnetic flux can easily reach a detection face of the magnetic sensor 111.

The slinger 125 includes: a cylindrical part 135 an inner end (a right end) in the axial direction of which is fitted with the small-diameter part 104a of the wheel-side raceway member 104; and an outer flange part 136 which is continued from an outer end (a left end) of the cylindrical part 135 in the axial direction and extends toward the fixed-side sealing member 108.

The elastic seal holder 124 includes: a cylindrical part 137 which is press-fitted into an inner bore of the waterproofing cylindrical part 133 of the core 121; and an inner flange part 138 which extends inward from an inner end in the axial direction of the cylindrical part 137. A left end of the cylindrical part 137 is substantially flush with a left end of the waterproofing cylindrical part 133 of the core 121. There is formed a space for accommodating the elastic seal 123 between the inner flange part 138 and the outer flange part 136 of the slinger 125.

The elastic seal 123 has an axial lip 139 which is in slidable contact with the outer flange part 136 of the slinger 125, and two radial lips 140, 141 which are in slidable contact with the cylindrical part 135 of the slinger 125.
In the pulsar 110 of the rotation-side sealing member 109, N poles and S poles are alternately arranged to generate a magnetic force, so that the sensor 111 can output a rotation signal in cooperation with the pulsar 110. The pulsar 110 includes: a support member 142 in an annular shape; and a magnetized member 143 which is bonded to the support member 142. The support member 142 is formed of magnetic metal such as SUS430. The magnetized member 143 is magnetized with magnetic powder using rubber as a binder.

The support member 142 of the pulsar 110 includes: a cylindrical part 142a which is fitted with an outer periphery of the large-diameter part 104b of the wheel-side raceway member 104; and an inner flange 142b which extends inward in the radial direction from a left end of the cylindrical part 142a. The magnetized member 136 is provided on the outer periphery of the cylindrical part 142a so as to oppose the sensor 111, and a gap between the magnetized member 143 and the waterproofing cylindrical part 133 is set to be as small as possible with such an extent that they do not interfere with each other.

According to this sealing device 102 with the sensor, when the core 121 and the resin member 122 are formed by insertion molding, the left end portion of the fitting cylindrical part 131 of the core 121 is disposed within the resin member 122. Since the elastic seal 123 is not attached to the core 121, such a problem that the elastic seal 123 may be hardened, when the core 121 is disposed in the molding cavity and resin-molded, will not occur. Since there is no necessity of paying attention to a contact between the elastic seal 123 and the mold, the molding work can be made easier. The flange part 174 continued from the waterproofing cylindrical part 173 of the core 161 to which the elastic seal 163 is fitted, in the conventional sealing device (See Fig. 6), is unnecessary as means for fitting the elastic seal, and also unnecessary as the flat part to which the mold is brought into contact. Therefore, by omitting this flange part 174, a size of the core in the radial direction can be reduced, and bending work of the core can be easily performed.

Fig. 4 shows a sensor-integrated sealing device and a rolling bearing device using the same according to a third embodiment of the invention. In this third embodiment, only a shape of the core is different from the second embodiment. In the following description, the same constituent members as in the second embodiment will be denoted with the same reference numerals, and description of them will be omitted.

The core 121 of the fixed-side sealing member 108 in this embodiment has: a fitting cylindrical part 131 which is fitted with a left end part of the body-side raceway member 103; a connecting part 132 which is continued from an inner end (a right end) of the cylindrical part 131 in an axial direction and extends inward in the radial direction (in a direction toward the rotation-side sealing member 109); a waterproofing cylindrical part 133 which is continued from the connecting part 132 and extends outward in the axial direction (leftward); and a flange part 134 which is continued from the waterproofing cylindrical part 133 and extends inward in the radial direction.

The flange part 134 of the core 121 is positioned outward in the axial direction than the outer flange part 136 of the slinger 125, and has an inner diameter which is slightly smaller than an outer diameter of the cylindrical part 135 of the slinger 125. The flange part 134 is so designed as to cover an entirety of the sensor-integrated sealing device 102 from outside in the axial direction. As a result, sealing effect is added by the flange part 134 of the core 121, in comparison with the conventional sealing device as shown in Fig. 6.

Therefore, according to the sensor-integrated sealing device 102 in the third embodiment, as compared with the conventional sealing device in which a sealing member called as a deflector is press-attached to the constant velocity joint or the like thereby to assist the sealing performance of the sealing device, thereby making such a sealing member unnecessary.

The above-described sealing device 102 with the sensor can be used in the hub unit 101 for a driving wheel or a driven wheel, and can be also used in various types of rolling bearing devices and in various types of rotary devices which are relatively rotated, besides the hub unit 101.

## Claims

1. A sensor device, comprising:
a fixed-side member, comprising:
a core, fitted with a fixed member; and
a sensor, resin-molded with the core; and
a rotation-side member, fitted with a rotary member, wherein:
the core of the fixed-side member has a fitting cylindrical part fitted with the fixed member;
an outer end portion of the fitting cylindrical part is insertion-molded to be disposed within a resin member; and
an outer edge portion of the fitting cylindrical part in an axial direction thereof is bent.

2. A sensor-integrated rolling bearing device, comprising:
a rolling bearing, comprising:
a fixed ring;
a rotary ring; and
a rolling element disposed between the rings;
a fixed-side sealing member, comprising:
a core, fitted with the fixed ring; and
a sensor, resin-molded with the core; and
a rotation-side sealing member, comprising:
a cylindrical part, fitted with the rotary ring; and
a flange part, continued from an outer end portion of the cylindrical part in an axial direction thereof and extending toward the fixed-side sealing member, wherein:
the core of the fixed-side sealing member comprises:
a fitting cylindrical part, fitted with the fixed ring;
a flange part, continued from an inner end portion of the fitting cylindrical part in an axial direction thereof and extending toward the cylindrical part of the rotation-side sealing member; and
a waterproofing cylindrical part, continued from the flange part and extending outward in an axial direction thereof;
an outer end portion of the fitting cylindrical part is insertion-molded to be disposed within a resin member;
an elastic seal is provided on at least one of an outer end portion of the waterproofing cylindrical part in the axial direction thereof and an outer end portion of the rotation-side sealing member in an axial direction thereof;
an outer end portion of the fitting cylindrical part in the axial direction thereof is bent.

3. A sensor-integrated sealing device, comprising:
a fixed-side sealing member, comprising:
a core, fitted with a fixed member; and
a sensor, resin-molded with the core; and
a rotation-side sealing member, comprising:
a cylindrical part, fitted with a rotary member; and
a flange part, continued from an outer end portion of the cylindrical part in an axial direction thereof and extending toward the fixed-side sealing member, wherein:
the core of the fixed-side sealing member comprises:
a fitting cylindrical part, fitted with the fixed member;
a flange part, continued from an inner end portion of the fitting cylindrical part in an axial direction thereof and extending toward the cylindrical part of the rotation-side sealing member; and
a waterproofing cylindrical part, continued from the flange part and extending outward in an axial direction thereof;
an outer end portion of the fitting cylindrical part is insertion-molded to be disposed within a resin member;
an elastic seal is provided on at least one of the core and the rotation-side sealing member;
an elastic seal holder is press-fitted into the core; and
the elastic seal is attached to the elastic seal holder so as to be in slidable contact with the rotation-side sealing member.

4. The sensor-integrated sealing device as set forth in claim 3, wherein:
the core comprises a flange part continued from the waterproofing cylindrical part and opposing the flange part of the rotation-side sealing member from an outside in the axial direction thereof.

5. A rolling bearing device, comprising:
a rolling bearing, integrally provided with the sensor-integrated sealing device as set forth in claim 3 or 4, and comprising:
a fixed ring, serving as the fixed member;
a rotary ring, serving as the rotary member; and
a rolling element, disposed between the rings.
